# EUROPÄISCHE PATENTSCHRIFT

(11) **EP 1 398 499 B1**
(45) Veröffentlichungstag und Bekanntmachung des Hinweises auf die Patenterteilung: **15.03.2006**
(21) Anmeldenummer: 03028387.3
(22) Anmeldetag: 06.06.1998
(51) Int. Cl.: F03D 1/06

(54) **Befestigung von Rotorblättern an der Nabe einer Windenergieanlage**
Attachment of rotor blades to the hub of a wind turbine
Fixation des aubes sur le moyeu d'éolienne

(30) Priorität: 01.08.1997 DE 19733372
(43) Veröffentlichungstag der Anmeldung: 17.03.2004
(62) Teilanmeldung aus: 98929427.7
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner

(56) Entgegenhaltungen:
- WO-A-01/42647
- DE-A- 3 401 698
- HAU ERICH ED - HAU E: "WINDKRAFTANLAGEN" WINDKRAFTANLAGEN. GRUNDLAGEN, TECHNIK, EINSATZ, WIRTSCHAFTLICHKEIT, BERLIN : SPRINGER, DE, 1996, Seiten 186-213, XP002143305 ISBN: 3-540-57430-1

## Beschreibung

Die vorliegende Erfindung betrifft ein Rotorblatt für eine Windenergieanlage, mit mindestens einer im Bereich der Rotorblattwurzel angeordneten, sich im wesentlichen quer zur Längsachse des Rotorblatts erstreckenden Ausnehmung zur Aufnahme eines Querbolzens, der zum Anschluß des Rotorblatts an eine Rotornabe einer Windenergieanlage mit einem Zugelement verbindbar ist.

Die Erfindung betrifft ferner einen Rotor für eine Windenergieanlage mit einer Rotornabe und mindestens einem an der Rotornabe befestigten Rotorblatt sowie eine Windenergieanlage mit einem solchen Rotor.

Ein Rotorblatt sowie ein solcher Rotor der eingangs genannten Art für eine Windenergieanlage sind bekannt. Sie kommen beispielsweise an einer Windenergieanlage mit der Bezeichnung AEOLUS II zum Einsatz, die als Versuchsanlage von Messerschmidt-Bölkow-Blohm (MBB) entwickelt wurde ("Windkraftanlagen", Erich Hau, 2. Aufl., Springer-Verlag, Berlin, Heidelberg, New York, ISBN 3-540-5743-1, S. 203).

Bei Windenergieanlagen ist die Befestigung der erheblichen Kräften ausgesetzten Rotorblätter an der Welle der Windenergieanlage, die mit dem Generator gekoppelt ist, ein generelles Problem, denn aufgrund der auf den Rotor wirkenden Kräfte sind die verwendeten Bauteile extremen Beanspruchungen ausgesetzt. Der konstruktiven Gestaltung des sogenannten Rotorblattanschlusses, d. h. der Befestigung des Rotorblatts an der Rotornabe, kommt somit eine große Bedeutung zu.

Bei einer bekannten Windenergieanlage wird das aus einem Verbundwerkstoff bestehende Rotorblatt im Bereich der sogenannten Rotorblattwurzel, d.h. in dem mit der Rotornabe zu verbindenden Endbereich des Rotorblatts, mit einem aus einem inneren und äußeren Ringflansch bestehenden, metallischen Flansch verbunden, indem die Rotorblattwurzel zwischen den inneren und äußeren Ringflansch eingefaßt und durch Verklebung und Verschraubung befestigt wird. Zur Herstellung der Schraubverbindung wird ein Bolzen durch eine das Rotorblatt vollständig durchsetzende Durchgangsbohrung indem Rotorblatt hindurchgesteckt und verschraubt. Der Flansch ist mit seinem der Rotorblattwurzel gegenüberliegenden Ende mit der Rotornabe verschraubt. Diese Konstruktion des Rotorblattanschlusses ist konstruktiv verhältnismäßig kompliziert und schwer, da der metallische Flansch ein großes Gewicht aufweist. Besonders nachteilig ist es, daß das Rotorblatt durch die Durchgangsbohrungen zur Aufnahme der Bolzen im Bereich der Rotorblattwurzel nicht unwesentlich geschwächt wird.

Eine weitere bekannte Windenergieanlage weist als Rotorblattanschluß eine Stahlflanschverbindung auf, bei der die Rotorblattwurzel zwischen einem inneren und äußeren Flansch eingeklemmt ist und die beiden Flansche miteinander verschraubt sind. Die Verbindung der beiden Flansche mit der Rotornabe erfolgt über einen abstehenden Flanschring mit Hilfe von hochbelastbaren Dehnschrauben. Bei dieser Konstruktion tragen die metallischen Flansche erheblich, häufig bis zu einem Drittel, zum Gesamtgewicht des Rotorblattes bei. Ferner ist der Kraftverlauf aufgrund eines radialen Versatzes zwischen der Rotorblattwurzel und dem abstehenden Flansch ungünstig, da es zu einer unerwünschten Hebelwirkung kommt.

Bei der oben angesprochenen Versuchsanlage AEOLUS II kommt ein sogenannter Querbolzenanschluß zum Einsatz, bei dem sogenannte Querbolzen im Bereich der Rotorblattwurzel (d.h. dem nabenseitigen Endbereich des Rotorblatts) in Durchgangsbohrungen angeordnet sind, die in dem Rotorblatt ausgebildet sind und dieses vollständig durchsetzen. Die innerhalb der Durchgangsbohrungen angeordneten Querbolzen sind in das Rotorblatt einlaminiert und dienen als Verankerungselemente innerhalb des Rotorblattes. Die Querbolzen sind jeweils mit einem Zugelement, das als bolzenförmiger Zuganker ausgebildet ist, verbunden, der mit der Rotornabe verschraubt ist. Mittels des unter Zug stehenden Zugelements wird das Rotorblatt an die Nabe angepreßt und somit gehalten. Bei dieser Konstruktion ist es ebenfalls besonders nachteilig, daß das Rotorblatt im Bereich der Rotorblattwurzel durch die Durchgangsbohrungen zur Aufnahme der Querbolzen stark geschwächt wird. Ferner ist der Kraftverlauf im Bereich der flanschartigen Rotornabe ungünstig.

Die Aufgabe der vorliegenden Erfindung besteht darin, einen Rotor, ein Rotorblatt sowie eine Windenergieanlage anzugeben, bei denen die Nachteile des Standes der Technik weitgehend vermieden werden und die eine auf einfache Weise herstellbare, sichere und extremen Beanspruchungen standhaltende Verbindung zwischen Rotorblatt und Rotornabe aufweisen.

Diese Aufgabe wird erfindungsgemäß bei einem Rotorblatt sowie einem Rotor der eingangs genannten Art dadurch gelöst, daß die Ausnehmung das Rotorblatt nur teilweise durchsetzt.

Durch die erfindungsgemäße Ausbildung einer das Rotorblatt nicht vollständig sondern nur teilweise durchsetzenden Ausnehmung wird das Rotorblatt im Bereich der Rotorblattwurzel wesentlich weniger geschwächt als dies im Stand der Technik der Fall ist, wo eine das Rotorblatt vollständig durchsetzende Durchgangsbohrung zur Aufnahme des Querbolzens vorgesehen ist. Erfindungsgemäß wird errreicht, daß das Rotorblatt aufgrund der geringeren Materialschwächung bei vergleichbarer Baugröße größeren Beanspruchungen standhält. Ein Rotorblatt wird somit sicherer an einer Nabe einer Windenergieanlage befestigt, und die Baugröße des Rotorblattanschlusses kann relativ klein gehalten werden, so daß vergleichsweise leicht gebaut werden kann. Der erfindungsgemäße Rotorblattanschluß hält den extremen Beanspruchungen, denen das Rotorblatt und die Rotornabe im Bereich der Rotorblattwurzel ausgesetzt sind, dauerhaft stand.

Insbesondere bei Verwendung von faserverstärktem Epoxyharz-Verbundmaterial als leichter und gleichzeitig robuster Werkstoff für Rotorblätter kann eine dauerhafte Verankerung der Querbolzen in der Rotorblattwurzel realisiert werden. Dabei ergibt sich eine günstige Krafteinleitung von einem Querbolzen auf das Epoxyharz-Verbundmaterial des Rotorblattes.

Eine besonders bevorzugte Ausführungsform des erfindungsgemäßen Rotorblatts und des Rotors zeichnet sich dadurch aus, daß die Ausnehmung als Sackloch ausgebildet ist. Sie kann auf diese Weise besonders einfach von außen in dem Rotorblatt ausgebildet werden. Ein weiterer Vorteil ergibt sich dadurch, daß die im montierten Zustand innerhalb der von außen zugänglichen Sacklöcher angeordneten Querbolzen im Bedarfsfall ausgewechselt werden können, ohne daß das Rotorblatt beschädigt werden müßte.

Zweckmäßigerweise sind mehrere beabstandete Sacklöcher zur Aufnahme mehrerer Querbolzen in dem Rotorblatt vorgesehen, da sich dadurch die Festigkeit des Rotorblattanschlusses wesentlich erhöhen läßt, was insbesondere bei sehr großen Windenergieanlagen erforderlich ist. Die Sacklöcher können so beabstandet sein, daß das Material nur unwesentlich durch die Sacklöcher geschwächt wird.

Besonders bevorzugt ist eine Ausführungsform der Erfindung, bei der das Rotorblatt im Bereich der Rotorblattwurzel einen erweiterten Querschnitt aufweist und das Sackloch oder die Sacklöcher im Bereich des erweiterten Querschnitts angeordnet ist/sind. Auch durch diese Maßnahme kann die Belastbarkeit der Verbindung zwischen Rotorblatt und Rotornabe wesentlich erhöht werden, da das Rotorblatt durch die Querschnittserweiterung im Bereich der Rotorblattwurzel wesentlich geringeren Spannungen ausgesetzt wird und somit mit größeren Kräften beaufschlagbar ist. Durch die erfindungsgemäße Anordnung der Sacklöcher in dem Bereich des erweiterten Querschnitts ist eine günstige Krafteinleitung von dem Querbolzen auf das Material des Rotorblatts möglich, während eine wesentlich geringere Flächenpressung an der Grenzfläche zwischen Querbolzen und Innenfläche der Ausnehmung auftritt.

Gemäß einer besonders bevorzugten Ausführungsform der Erfindung erweitert sich der Querschnitt des Rotorblatts beidseitig in Richtung auf einen nabenseitigen Endabschnitt des Rotorblatts. Auf diese Weise wird eine symmetrische Krafteinleitung von den Querbolzen in das robuste Rotorblatt realisiert. Gemäß einer Weiterbildung dieses Ausführungsbeispiel weist das Rotorblatt zwei jeweils einstückig mit diesem ausgebildete, gegenüberliegende Verdickungsabschnitte auf, und die Sacklöcher sind mindestens teilweise im Bereich eines Verdickungsabschnitts angeordnet. Diezur Querschnittserweiterung beitragenden Verdickungsabschnitte können durch Anlaminieren von mehreren Schichten aus Faserverbundmaterial und Epoxyharz auf einfache Weise angeformt werden.

Besonders bevorzugt ist ferner eine Ausführungsform, bei der das Rotorblatt im Bereich der Rotorblattwurzel einen im wesentlichen rohrförmigen Endabschnitt aufweist, in welchem innen und außen mehrere Sacklöcher ausgebildet sind. Ein rohrförmiger Endabschnitt kann auf besonders gleichmäßige und einfache Weise an der Rotornabe befestigt werden und ist insbesondere bei sehr großen Windenergieanlagen, bei denen extreme Kräfte auftreten, vorteilhaft, deren Rotorblätter von dem rohrförmigen Endabschnitt zur Befestigung in einen Flügelprofilabschnitt übergehen.

Eine Weiterbildung zeichnet sich aus durch mehrere mit je einem Sackloch verbundene, sich im wesentlichen in Richtung der Längsachse des Rotorblatts erstrekkende Bohrungen zur Aufnahme je eines mit einem Querbolzen verbindbaren Zugelements. Auf diese Weise sind die Zugelemente in vorteilhafter Weise teilweise innerhalb des Rotorblatts in den Bohrungen angeordnet und können dabei an einer mittig in den Querbolzen angeordnete, mit einem Gewinde versehene Bohrung angreifen, so daß die Querbolzen symmetrisch mit der Zugkraft beaufschlagt werden und im wesentlichen momentenfrei innerhalb des Rotorblatts angeordnet sind.

Eine günstige Krafteinleitung und eine hohe Festigkeit ergibt sich, wenn das Sackloch oder die Sacklöcher im wesentlichen zylinderförmig sind und eine Tiefe aufweisen, die etwa einem Drittel des Querschnitts des Rotorblatts im Bereich der Rotorblattwurzel entspricht.

Eine große Leichtigkeit des Materials verbunden mit einer großen Festigkeit ergibt sich bei einer Ausführungsform, bei der das Rotorblatt im wesentlichen aus einem glasfaserverstärkten Epoxyharz-Verbundmaterial besteht.

Die zuvor erläuterten Vorteile eines erfindungsgemäßen Rotorblatts ergeben sich auf ähnliche Weise bei einem Rotor für eine Windenergieanlage der eingangs genannten Art, der mit einem erfindungsgemäßen Rotorblatt ausgestattet ist. Zur Vermeidung von Wiederholungen wird deshalb hinsichtlich der vorteilhaften Wirkungen auf die vorstehenden Ausführungen Bezug genommen.

Eine bevorzugte Weiterbildung des erfindungsgemäßen Rotors zeichnet sich dadurch aus, daß die Rotornabe einen umlaufenden, in Querschnitt im wesentlichen T-förmigen Flanschabschnitt zum Anschluß des Rotorblatts aufweist und das Rotorblatt mittels mehrerer Zugelemente, die mit je einem an dem Rotorblatt verankerten Querbolzen verbunden sind, mit dem Flanschabschnitt verschraubt ist. Durch den zweckmäßigerweise symmetrischen T-förmigen Flanschabschnitt kann eine symmetrische Krafteinleitung von einem Rotorblatt auf die Nabe realisiert werden, indem in den beiden im wesentlichen in einer Ebene liegenden freien Abschnitten des T-förmigen Flanschabschnitts die Durchgangsbohrungen ausgebildet sind, durch die die Zugelemente hindurchragen. Zweckmäßigerweise sind die mehreren Zugelemente paarweise parallel zueinander und im wesentlichen in zwei zueiander konzentrisch angeordneten Reihen angeordnet. Dabei können die paarweise gegenüberliegenden Zugelemente direkt gegenüberliegend oder versetzt zu den Zugelementen der anderen Reihe angeordnet sein.

Die erfindungsgemäßen Vorteile werden auch bei einer Windenergieanlage realisiert, die mit einem Rotor und/oder einem Rotorblatt der zuvor beschriebenen Art ausgestattet ist; hinsichtlich der hierdurch, erreichbaren erfindungsgemäßen Vorteile wird auf die vorstehenden Ausführungen im Zusammenhang mit einem erfindungsgemäßen Rotorblatt und Rotor verwiesen.

Die Erfindung wird nachstehend anhand eines Ausführungsbeispiels eines Rotors einer Windenergieanlage unter Bezugnahme auf die beiliegenden Zeichnungen beschrieben. Es zeigen:
- Fig. 1: eine schematische Darstellung einer erfindungsgemäßen Windenergieanlage;
- Fig. 2: eine Schnittdarstellung der erfindungsgemäßen Befestigung eines Rotorblatts an einer Rotornabe einer Windenergieanlage (Rotorblattanschluß);
- Fig. 3: eine schematische Ansicht eines Endabschnitts des erfindungsgemäßen Rotorblatts aus Fig. 1; und
- Fig. 4: eine weitere schematische Ansicht eines Endabschnitts eines alternativen Ausführungsbeispiels eines erfindungsgemäßen Rotorblatts.

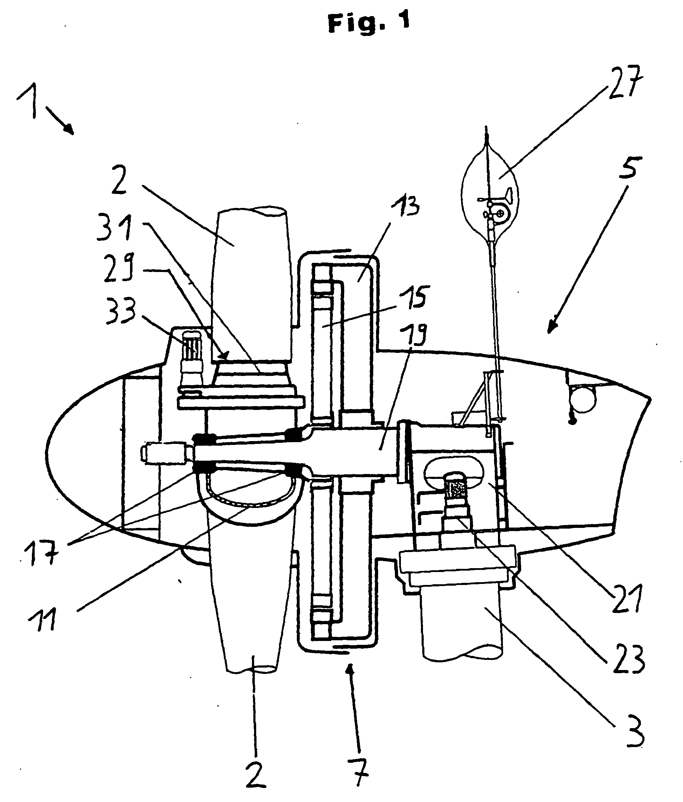

Die in Fig. 1 dargestellte Windenergieanlage 1 umfaßt im wesentlichen einen Turm 3 und eine an diesem befestigte Gondel 5 zur Aufnahme eines Generators 7 sowie eines damit direkt verbundenen Rotors 9. Der Rotor 9 weist eine Rotornabe 11 sowie beispielsweise drei an der Rotornabe 11 befestigte Rotorblätter 2 auf. Durch die auf das Rotorblatt 2 wirkenden Windkräfte wird die Rotornabe 11 in Drehung versetzt, um den Generator 7 anzutreiben.

Der als Ringgenerator ausgefildete Generator 7 weist einen Stator 13 und einen Läufer 15 auf. Der Läufer 15 ist zusammen mit der Rotornabe 11 mittels Hauptlagern 17 an einem Lagerzapfen 19 gelagert, der fest mit einem Maschinenträger 21 verbunden ist. Der Maschinenträger 21 ist mittels eines Azimutmotors 23 verschwenkbar an dem Turm 3 gelagert. An dem Maschinenträger 21 ist ferner ein Anemometer 27 befestigt.

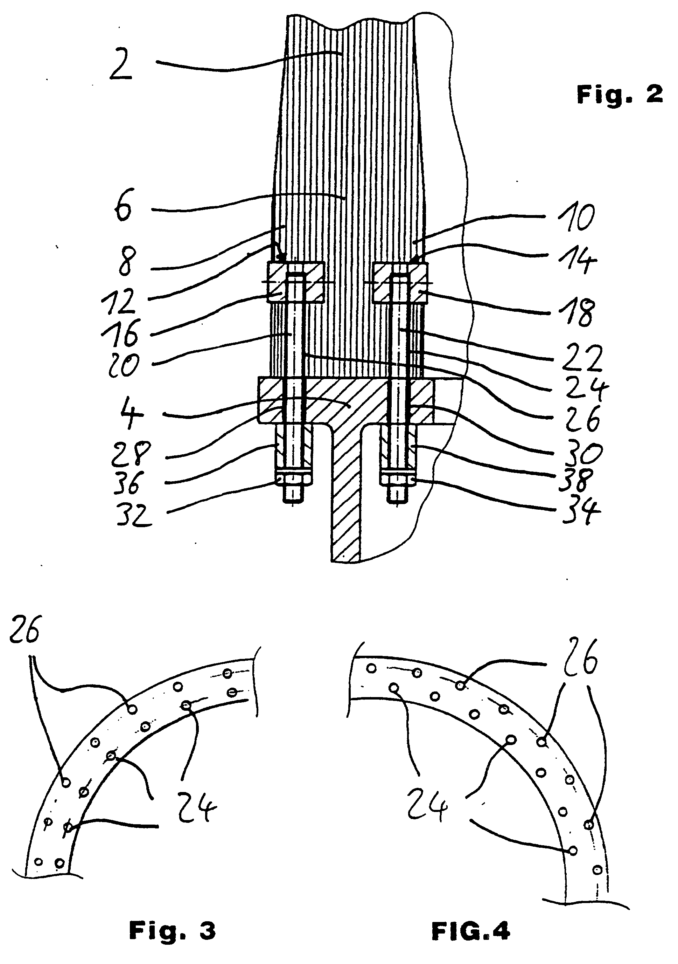

Fig. 2 zeigt in einer Schnittdarstellung einen Abschnitt eines Rotorblatts 2 einer Windenergieanlage 1, bei der es sich beispielsweise um eine sogenannte Horizontalachsen-Windenergieanlage handeln kann.

Das in Fig. 2 teilweise dargestellte Rotorblatt 2 ist in Leichtbauweise aus einem faserverstärkten Epoxyharz-Verbundmaterial hergestellt und mittels eines erfindungsgemäßen Rotorblattanschlusses 29 (Fig. 1) mit der Rotornabe 11 fest verbunden, indem das Rotorblatt 2 mit einem im Querschnitt T-förmigen, umlaufenden Flanschabschnitt 4 verschraubt ist, der seinerseits starr mit der Rotornabe 11 verbunden ist. Der in Fig. 1 dargestellte Abschnitt des Rotorblatts 2 ist - ebenso wie der Flanschabschnitt 4 - umlaufend und im wesentlichen rohrförmig ausgebildet und geht mit zunehmendem Abstand von der Rotornabe 11 in das - nicht dargestellte - Flügelprofil über. Zwischen dem Rotorblattanschluß 29 und der Rotornabe 11 ist ein Blattadapter 31 angeordnet. Mit Hilfe eines Blattverstellmotors kann ein Rotorblatt 2 zusammen mit einem Blattanschluß 29 und einem Blattadapter 31 um eine Längsachse des Rotorblatts 2 verdreht werden.

Fig. 2 veranschaulicht die erfindungsgemäße zweiseitige Erweiterung des Querschnitts oder Verdickung des Rotorblatts 2 im Bereich der Rotorblattwurzel 6, d.h. im Ausführungsbespiels dem Endbereich des im wesentlichen rohrförmigen Abschnitts des Rotorblatts 2, welcher im montierten Zustand mit dem Flanschabschnitt 4 der Rotornabe 11 verbunden ist. An gegenüberliegenden seitlichen Bereichen der Rotorblattwurzel 6 sind Verdickungsabschnitte 8,10 angeformt, die für eine Erweiterung des Querschnitts des Rotorblatts 2 in Richtung auf den Endbereich des Rotorblatts 2 im Bereich der Rotorblattwurzel 6 sorgen. Durch den erweiterten Querschnitt aufgrund der an beiden Seiten des Rotorblatts 2 angeformten Verdickungsabschnitte 8, 10 wird dort eine große Festigkeit erzielt. Die Verdickungsabschnitte 8, 10 können beispielsweise durch Anbringen zusätzlicher Epoxyharz-und Faserschichten hergestellt werden.

Im Bereich der Rotorblattwurzel 6 sind mehrere das Rotorblatt 2 nicht vollständig, sondern nur teilweise durchsetzende Ausnehmungen in Form von Sacklöchern 12, 14 vorgesehen, die eine zylindrische Form haben und sich von der Oberfläche in das Innere des Rotorblatts 2 erstrecken. Die zylindrischen Sacklöcher 12 weisen eine Tiefe auf, die etwa einem Drittel der gesamten (Querschnitts-) Dicke des Rotorblatts 2 im Bereich der Rotorblattwurzel 6 entspricht.

Innerhalb der Sacklöcher 12, 14 sind Querbolzen 16, 18 aus Metall als Verankerungselemente innerhalb des Rotorblatts 2 angeordnet und einlaminiert. Die Querbolzen 16, 18 weisen je eine mit einem Innengewinde versehene Durchgangsbohrung auf. Sie wirken mit Zugelementen 20, 22 in Form von zylindrischen Bolzen aus Metall zusammen, indem ein Außengewinde der Zugelemente 20, 22 in das Innengewinde der Querbolzen 16, 18 eingeschraubt ist.

Die Zugelemente 20, 22 erstrecken sich durch je eine innerhalb des Rotorblatts 2 angeordnete Bohrung 24, 26 sowie je eine Bohrung 28, 30 innerhalb des Flanschabschnitts 4. Mittels einer auf ein Außengewinde der Zugelemente 20, 22 aufschraubbaren Mutter 32, 34 und der Zwischenschaltung einer Hülse 36, 38 können die Zugelemente 20, 22 mit großen Zugkräften beaufschlagt und somit das Rotorblatt 2 fest an den Flanschabschnitt 4 und somit die Rotornabe 11 angezogen werden, so daß eine feste Verbindung zwischen Rotorblatt 2 und Rotornabe 11 hergestellt wird.

Fig. 3 zeigt eine Ansicht des Rotorblatts 2 gernäß einem ersten, in Fig. 2 dargestellten Ausführungsbeispiel der Erfindung, bei dem mehrere Zugelemente 20, 22 (Fig. 2) beabstandet zueinander in zwei konzentrischen Reihen jeweils paarweise gegenüberliegend angeordnet sind. In Fig. 3 sind die Bohrungen 24, 26 in dem Rotorblatt 2 erkennbar, die entlang zweier konzentrischer kreisförmiger Reihen angeordnet sind.

Fig. 4 zeigt ein alternatives Ausführungsbeispiel der Erfindung, bei dem die Bohrungen 26, 24 und somit auch die Zugelemente 20, 22 und Querbolzen 16, 18 ebenfalls in zwei im wesentlichen konzentrischen Reihen entlang der rohrförmigen Rotorblattwurzel 6 in den beiden Reihen versetzt zueinander angeordnet sind.

## Patentansprüche

1. Rotorblatt einer Windenergieanlage mit mindestens einer im Bereich der Rotorblattwurzel (6) angeordneten, sich im Wesentlichen quer zur Längsachse des Rotorblatts (2) erstreckenden Ausnehmung zur Aufnahme eines Querbolzens (16, 18), der zum Anschluss des Rotorblatts an eine Rotornabe (11) einer Windenergleanlage mit einem Zugelement (20. 22) verbindbar ist,
wobei die Rotorblattwurzel (6) eine Vielzahl von Ausnehmungen zur Aufnahme von Querbolzen (16, 18) aufweist,
**dadurch gekennzeichnet, dass** die Querbolzen (16, 18) auf im Wesentlichen zwei konzentrischen Kreisbahnen entlang der Rotorblattwurzel (6) liegen.

2. Rotorblatt einer Windenergieanlage mit mindestens einer im Bereich der Rotorblattwurzel (6) angeordneten, sich im Wesentlichen quer zur Längsachse des Rotorblatts (2) erstreckenden Ausnehmung zur Aufnahme eines Querbolzens (16, 18), der zum Anschluss des Rotorblatts (2) an eine Rotornabe (11) einer Windenergieanlage mit einem Zugelement verbindbar ist,
wobei die Rotorblattwurzel (6) eine Vielzahl von Ausnehmungen zur Aufnahme von Querbolzen (16,18) aufweist,
**dadurch gekennzeichnet, dass** diese Ausnehmungen zur Aufnahme der Querbolzen als Sacklöcher (12, 14) ausgebildet sind und auf im Wesentlichen zwei konzentrischen Kreisbahnen entlang der Rotorblattwurzel (6) liegen .

3. Rotorblatt nach Anspruch 1,
**dadurch gekennzeichnet, dass** das Rotorblatt (2) im Bereich der Rotorblattwurzel (6) einen erweiterten Querschnitt aufweist und die Vielzahl von Ausnehmungen zur Aufnahme von Querbolzen im Bereich des erweiterten Querschnitts angeordnet sind.

4. Rotorblatt nach Anspruch 2,
**dadurch gekennzeichnet, dass** das Rotorblatt (2) im Bereich der Rotorblattwurzel (6) einen erweiterten Querschnitt aufweist und dass das Loch (12, 14) oder die Löcher (12, 14) im Bereich des erweiterten Querschnitts angeordnet ist/sind.

5. Rotorblatt nach Anspruch 3 oder 4.
**dadurch gekennzeichnet, dass** sich der Querschnitt des Rotorblatts (2) beidseitig in Richtung auf einen nabenseitigen Endabschnitt des Rotorblatts (2) erweitert.

6. Rotorblatt nach Anspruch 5.
**dadurch gekennzeichnet, dass** das Rotorblatt (2) einstückig mit diesen ausgebildete, gegenüberliegende Verdickungsabschnitte (8, 10) aufweist und die Löcher (12, 14) mindestens teilweise im Bereich eines Verdickungsabschnitts (8, 10) angeordnet sind.

7. Rotorblatt nach mindestens einem der Ansprüche 2 bis 6,
**dadurch gekennzeichnet, dass** das Rotorblatt (2) im Bereich der Rotorblattwurzei (6) einen im Wesentlichen rohrförmigen Endabschnitt aufweist, in welchem innen und außen mehrere Sacklöcher (12,14) ausgebildet sind.

8. Rotorblatt nach mindestens einem der vorstehenden Ansprüche,
**gekennzeichnet durch** mehrere mit je einem Loch (12, 14) verbundene, sich im Wesentlichen in Richtung der Längsachse des Rotorblatts (2) erstreckende Bohrungen (24, 26) zur Aufnahme je eines mit einem Querbolzen (16, 18) verbindbaren Zugelements (20, 22).

9. Rotorblatt nach einem oder mehreren der Ansprüche 2 bis 8,
**dadurch gekennzeichnet, dass** das Sackloch (12, 14) oder die Sacklöcher (12. 14) im Wesentlichen zylinderförmig sind und eine Tiefe aufweisen, die etwa einem Drittel des Querschnitts des Rotorblatts (2) im Bereich der Rotarblattwurzel (6) entspricht.

10. Rotorblatt nach mindestens einem der vorstehenden Ansprüche,
**dadurch gekennzeichnet, dass** es im Wesentlichen aus einem glasfaserverstärkten Epoxyharz-Verbundmaterial besteht

11. Rotor für eine Windenergleanlage,
mit einer Rotornabe (11) und mindestens einem an der Rotornabe (11) befestigten Rotorblatt (2),
**dadurch gekennzeichnet, dass** das mindestens eine Rotorblatt (2) nach einem der vorstehenden Ansprüche ausgebildet ist.

12. Rotor nach Anspruch 11,
**dadurch gekennzeichnet dass** die Rotornabe (11) einen umlaufenden, im Querschnitt im Wesentlichen T-förmigen Flanschabschnitt (4) zum Anschluss des Rotorblatts (2) aufweist und das Rotorblatt (2) mittels mehrerer Zugelemente (20, 22), die mit je einem an dem Rotorblatt (2) verankerten Querbolzen (16, 18) verbunden sind, mit dem Flanschabschnitt (4) verschraubt ist.

13. Rotor nach Anspruch 12,
**dadurch gekennzeichnet, dass** die mehreren Zugelemente (20, 22) paarweise parallel zueinander und in zwei im Wesentlichen zueinander konzentrisch angeordneten Reihen angeordnet sind.

14. Rotor nach Anspruch 13,
**dadurch gekennzeichnet, dass** die Zugelemente (20, 22) der einen Reihe relativ zu den Zugelementen (20. 22) der anderen Reihe versetzt angeordnet sind.

## Claims

1. Rotor blade of a wind energy installation, having at least one recess which is arranged in the area of the rotor blade root (6) and extends essentially transversely with respect to the longitudinal axis of the rotor blade (2), for holding one transverse bolt (16, 18) which can be connected to a tensioning element (20, 22) for connection of the rotor blade to a rotor hub (11) of a wind energy installation,
wherein the rotor blade root (6) has a large number of recesses for holding transverse bolts (16, 18),
**characterized in that** the transverse bolts (16, 18) are located on essentially two concentric circular paths along the rotor blade root (6).

2. Rotor blade of a wind energy installation having at least one recess, which is arranged in the area of the rotor blade root (6) and extends essentially transversely with respect to the longitudinal axis of the rotor blade (2), for holding a transverse bolt (16, 18) which can be connected to a tensioning element for connection of the rotor blade (2) to a rotor hub (11) of a wind energy installation,
wherein the rotor blade root (6) has a large number of recesses for holding transverse bolts (16, 18),
**characterized in that** these recesses are in the form of blind holes (12, 14) in order to hold the transverse bolts, and lie on essentially two concentric circular paths along the rotor blade root (6).

3. Rotor blade according to Claim 1,
**characterized in that** the rotor blade (2) has a widened cross section in the area of the rotor blade root (6), and the large number of recesses for holding transverse bolts are arranged in the area of the widened cross section.

4. Rotor blade according to Claim 2, **characterized in that** the rotor blade (2) has a widened cross section in the area of the rotor blade root (6), and **in that** the hole (12, 14) or the holes (12, 14) is or are arranged in the area of the widened cross section.

5. Rotor blade according to Claim 3 or 4,
**characterized in that** the cross section of the rotor blade (2) is widened on both sides in the direction of the hub end section of the rotor blade (2).

6. Rotor blade according to Claim 5,
**characterized in that** the rotor blade (2) has thickened sections (8, 10) which are formed integrally with it and are opposite one another, and at least some of the holes (12, 14) are arranged in the area of the thickened section (8, 10).

7. Rotor blade according to at least one of Claims 2 to 6,
**characterized in that** the rotor blade (2) has an essentially tubular end section, in which two or more blind holes (12, 14) are formed on the inside and outside, in the area of the rotor blade root (6).

8. Rotor blade according to at least one of the preceding claims,
**characterized by** two or more holes (24, 26), which are connected to a respective hole (12, 14) and extend essentially in the direction of the longitudinal axis of the rotor blade (2), for holding a respective tensioning element (20, 22) which can be connected to a transverse bolt (16, 18).

9. Rotor blade according to one or more of Claims 2 to 8,
**characterized in that** the blind hole (12, 14) or the blind holes (12, 14) is or are essentially cylindrical and has or have a depth which corresponds approximately to one third of the cross section of the rotor blade (2) in the area of the rotor blade root (6).

10. Rotor blade according to at least one of the preceding claims,
**characterized in that** the rotor blade is essentially composed of a glass-fibre-reinforced epoxy resin composite material.

11. Rotor for a wind energy installation,
having a rotor hub (11) and at least one rotor blade (2) which is attached to the rotor hub (11),
**characterized in that** the at least one rotor blade (2) is designed according to one of the preceding claims.

12. Rotor according to Claim 11,
**characterized in that** the rotor hub (11) has a circumferential flanged section (4), whose cross section is essentially T-shaped, for connection of the rotor blade (2), and the rotor blade (2) is screwed to the flanged section (4) by means of two or more tensioning elements (20, 22), which are connected to a respective transverse bolt (16, 18) that is anchored on the rotor blade (2).

13. Rotor according to Claim 12,
**characterized in that** the two or more tensioning elements (20, 22) are arranged in pairs parallel to one another, and are arranged in two rows which are arranged essentially concentrically with respect to one another.

14. Rotor according to Claim 13,
**characterized in that** the tensioning elements (20, 22) in one row are arranged offset relative to the tensioning elements (20, 22) in the other row.

## Revendications

1. Pale de rotor d'une éolienne, avec au moins un trou disposé au niveau de la racine de la pale de rotor (6), s'étendant pour l'essentiel en travers de l'axe longitudinal de la pale de rotor (2), destiné à recevoir un goujon transversal (16, 18) pouvant être assemblé avec un tirant (20, 22) en vue du raccordement de la pale de rotor (2) à un moyeu de rotor (11) d'une éolienne,
la racine de la pale de rotor (6) comprenant une pluralité de trous destinés à recevoir des goujons transversaux (16, 18),
**caractérisée en ce que** les goujons transversaux (16, 18) se situent pour l'essentiel sur deux trajectoires circulaires concentriques le long de la racine de la pale de rotor (6).

2. Pale de rotor d'une éolienne avec au moins un trou disposé au niveau de la racine de la pale de rotor (6), s'étendant pour l'essentiel en travers de l'axe longitudinal de la pale de rotor (2), destiné à recevoir un goujon transversal (16, 18) pouvant être assemblé avec un tirant en vue du raccordement de la pale de rotor (2) à un moyeu de rotor (11) d'une éolienne,
la racine de la pale de rotor (6) comprenant une pluralité de trous destinés à recevoir les goujons transversaux (16, 18),
**caractérisée en ce que** ces trous destinés à recevoir les goujons transversaux sont réalisés sous forme de trous borgnes (12, 14) et se situent pour l'essentiel sur deux trajectoires circulaires concentriques le long de la racine de la pale de rotor (6).

3. Pale de rotor selon la revendication 1,
**caractérisée en ce que** la pale de rotor (2) comprend au niveau de la racine de la pale de rotor (6) une section transversale élargie et la pluralité des trous destinés à recevoir les goujons transversaux est disposée au niveau de la section transversale élargie.

4. Pale de rotor selon la revendication 3 ou 4,
**caractérisée en ce que** la pale de rotor (2) comprend au niveau de la racine de la pale de rotor (6) une section transversale élargie et **en ce que** le trou borgne (12, 14) ou les trous borgnes (12, 14) est/sont disposés au niveau de la section transversale élargie.

5. Pale de rotor selon la revendication 2,
**caractérisée en ce que** la section transversale de la pale de rotor (2) s'élargit des deux côtés en direction d'une section terminale de la pale de rotor (2) du côté du moyeu.

6. Pale de rotor selon la revendication 5,
**caractérisée en ce que** la pale de rotor (2) présente deux sections d'épaississement (8, 10) opposées, formées d'une seule pièce avec cette dernière et **en ce que** les trous borgnes (12, 14) sont disposés au moins en partie au niveau d'une section d'épaississement (8, 10).

7. Pale de rotor selon l'une quelconque des revendications 2 à 6,
**caractérisée en ce que** la pale de rotor (2) présente au niveau de la racine de la pale de rotor (6) une section terminale tubulaire pour l'essentiel, à l'intérieur et à l'extérieur de laquelle plusieurs trous borgnes (12, 14) sont réalisés.

8. Pale de rotor selon l'une quelconque des revendications précédentes,
**caractérisée par** plusieurs alésages (24, 26) associés chacun à un trou borgne (12, 14), s'étendant pour l'essentiel en direction de l'axe longitudinal de la pale de rotor (2), destinés à recevoir chacun un tirant (20, 22) pouvant être assemblé avec un goujon transversal (16, 18).

9. Pale de rotor selon l'une quelconque des revendications 2 à 8,
**caractérisée en ce que** le trou borgne (12, 14) ou les trous borgnes (12, 14) sont cylindriques pour l'essentiel et présentent une profondeur correspondant à peu près à un tiers de la section transversale de la pale de rotor (2) au niveau de la racine de la pale de rotor (6).

10. Pale de rotor selon l'une quelconque des revendications précédentes,
**caractérisée en ce qu'**elle se compose pour l'essentiel d'un matériau composite en résine époxy renforcé à la fibre de verre.

11. Rotor pour une éolienne,
avec un moyeu de rotor (11) et au moins une pale de rotor (2) fixée au moyeu de rotor (11),
**caractérisé en ce qu'**au moins une des pales de rotor (2) est réalisée selon l'une quelconque des revendications précédentes.

12. Rotor selon la revendication 11,
**caractérisé en ce que** le moyeu de rotor (11) présente une section à bride (4) périphérique avec section transversale en T pour l'essentiel, destinée au raccordement de la pale de rotor (2) et **en ce que** la pale de rotor (2) est boulonnée à la section à bride (4) à l'aide de plusieurs tirants (20, 22) qui sont chacun assemblés avec un goujon transversal (16, 18) ancré à la pale de rotor (2).

13. Rotor selon la revendication 12,
**caractérisé en ce que** les différents tirants (20, 22) sont disposés parallèlement par paires et en deux rangées disposées pour l'essentiel de manière concentrique.

14. Rotor selon la revendication 13,
**caractérisé en ce que** les tirants (20, 22) de la première rangée sont disposés en quinconce par rapport aux tirants (20, 22) de l'autre.
